# EUROPÄISCHE PATENTANMELDUNG

(11) **EP 0 541 039 A2**
(43) Veröffentlichungstag der Anmeldung: **12.05.1993**
(21) Anmeldenummer: 92118800.9
(22) Anmeldetag: 03.11.1992
(51) Int. Cl.: G07C 1/10

(54) **Vorrichtung zur Erfassung von Informationen**

(30) Priorität: 05.11.1991 DE 4136383
(71) Anmelder: Scharff, Wilhelm, D-27568 Bremerhaven (DE)
(72) Erfinder: Scharff, Wilhelm, D-27568 Bremerhaven (DE)
(74) Vertreter: Möller, Friedrich, Dipl.-Ing.

(57) **Zusammenfassung**

Bei der Zeitmessung insbesondere von Arbeitsabläufen werden eine große Anzahl von Zeitintervallen gemessen. Die die Zeitintervalle auswertende Person soll in die Lage versetzt sein, die gemessenen Arbeitsabläufe schnell auszuwerten.

Die Vorrichtung enthält eine Zeiterfassungseinheit (28) zur Ermittlung und Speicherung von Zeitintervallen. Erfindungsgemäß weist die Vorrichtung zusätzlich eine Tonaufzeichnungseinheit (12) auf, die Tonsignale, insbesondere Sprachsignale der bedienenden Person, als Kommentar bzw. Erklärung parallel zu der Zeitintervallmessung aufzeichnet.

Die Vorrichtung ist aufgrund ihrer Kompaktheit und ihrer einfachen Bedienbarkeit überall dort einsetzbar, wo nicht nur Zeitabläufe gemessen, sondern auch zusätzlich die diese betreffenden Informationen zur späteren Auswertung aufgezeichnet werden sollen.

## Beschreibung

Die Erfindung betrifft eine Vorrichtung zur Erfassung von Informationen nach dem Oberbegriff des Anspruchs 1.

Die Vorrichtung der hier angesprochenen Art soll vor allem zur Erleichterung von Arbeitsstudien dienen. Darüber hinaus kann sie zum Beispiel auch zur Erfassung von Informationen im Sportsektor eingesetzt werden.

Bekannt ist aus der DE-A-26 27 921 eine Zeiterfassungseinheit, die einen Zeitgeber und eine Anzeigeeinheit für die gemessenen Zeitintervalle aufweist. Mit dieser bekannten Zeiterfassungseinheit können nur Zeitintervalle gemessen und gespeichert werden. Bei vielen Erfassungsaufgaben, insbesondere bei Arbeitsstudien, reicht dieses nicht aus.

Der Erfindung liegt die Aufgabe zugrunde, eine Vorrichtung zur Erfassung von Informationen so auszubilden, daß sie einem umfassenden Dokumentationsbedürfnis gerecht wird.

Eine zur Lösung dieser Aufgabe dienende Vorrichtung weist die Merkmale des Anspruchs 1 auf. Durch die zusätzliche Einrichtung zur Aufnahme und Wiedergabe von akustischen Signalen wird erreicht, daß der Informationsgehalt der gespeicherten Zeitintervall-Daten wesentlich erhöht wird. Beispielsweise können Sprachsignale zur Kommentierung der jeweiligen Zeitintervalle aufgezeichnet werden. Alternativ zu den Sprachsignalen können aber auch Umfeldgeräusche, codierte Töne oder Tonfolgen aufgezeichnet werden.

Die Tonsignale werden vorzugsweise parallel zu den Zeitintervall-Daten in der Vorrichtung abgespeichert. Sie lassen sich dadurch besonders eindeutig dem jeweiligen Zeitintervall zuordnen. Alternativ kann die Tonaufzeichnung über das Ende der Zeitintervallmessung hinaus erfolgen. Insbesondere bei Zeitintervallmessungen von kurzer Dauer kann es vorteilhaft sein, die Tonaufzeichnung im Anschluß an die Zeitintervallmessung vorzunehmen.

Zur Steuerung der Zeiterfassungseinheit und der Tonaufzeichnungseinheit dient eine Steuereinheit. Diese ermöglicht infolge mehrfacher Funktionsbelegung eines Schalters eine Bedienung der erfindungsgemäßen Vorrichtung durch Betätigen einer geringen Anzahl von Schaltern.

Nach einer Weiterbildung der Erfindung sind die Schalter als Tasten-Schalter ausgebildet, wobei sich die Tonaufzeichnung bzw. die Zeitintervallmessung durch die Bedienung jeweils eines Schalters vornehmen läßt. Alternativ weist die Tonaufzeichnungseinheit zur Tonaufzeichnung einen Dauerdruck-Schalter auf. Die Aufnahmefunktion der Tonaufzeichnungseinheit bleibt somit nur so lange aktiviert, wie die Bedienperson den Dauerdruck-Schalter betätigt. Dieser eignet sich insbesondere für die Aufnahme von voraussehbar kurzen Tonaufzeichnungen.

Nach einem weiteren Vorschlag der Erfindung weist die Vorrichtung einen Signalgeber auf. Dieser zeigt den bedienenden Personen bei jeder einzelnen Zeitintervallmessung an, daß eine Tonaufzeichnungseinrichtung einzuschalten ist. Damit soll einer Unachtsamkeit des Bedienpersonals bei der Zeitintervallmessung vorgebeugt werden.

Nach einer Weiterbildung der Erfindung ist die Vorrichtung so ausgebildet, daß eine Auswertung und Bearbeitung der Zeitintervall-Daten und/oder der akustischen Signale nur von befugten Personen möglich ist. Dazu dient ein abschließbarer Schalter. Vorzugsweise ist dieser Schalter zweistufig ausgebildet, wobei in einer ersten Position die gespeicherten Zeitintervall-Daten ausgedruckt werden und in einer zweiten Position einerseits der Speicherinhalt des Speichers gelöscht und andererseits die Tonaufzeichnungseinheit unter Löschung der Tonaufzeichnung an den Startpunkt zurückgesetzt wird. Alternativ ist die Vorrichtung mit einer verschließbaren Abdeckung für eine oder mehrere Auswerttasten versehen. Hierdurch wird wirksam sichergestellt, daß die Auswertung der aufgezeichneten Daten nur von befugten Personen möglich ist.

Zum Abrufen der Tonaufzeichnung weist die Tonaufzeichnungseinheit einen Rücklauf-Schalter, einen Vorlauf-Schalter und einen Wiedergabe-Schalter auf, mit denen ein schneller Zugriff auf die einem bestimmten Zeitintervall zugeordnete Tonaufzeichnung gewährleistet ist.

Weitere vorteilhafte Ausgestaltungen der Vorrichtung sind den Unteransprüchen zu entnehmen.

Ein Ausführungsbeispiel der Erfindung wird nachfolgend anhand der Zeichnung näher erläutert. In dieser zeigen:
- Fig. 1: ein Blockschaltbild der Vorrichtung,
- Fig. 2: einen Funktionsablaufplan der Steuereinheit,
- Fig. 3: einen Ausdruck der gemessenen und berechneten Zeitintervall-Daten, und
- Fig. 4: eine alternativ ausgebildete Steuereinheit.

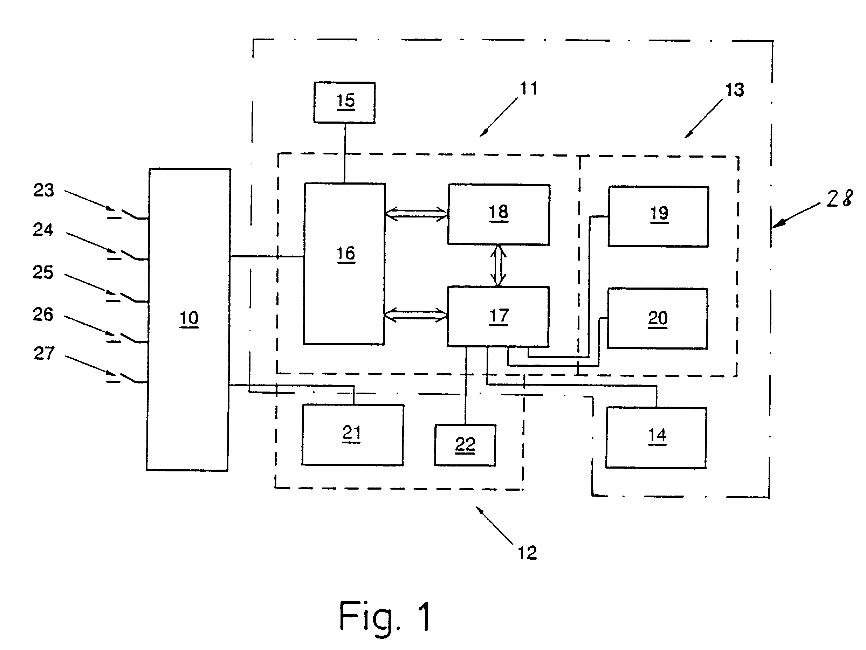

Die Vorrichtung des vorliegenden Ausführungsbeispiels weist gemäß Fig. 1 eine Tonaufzeichnungseinheit 12 und eine Zeiterfassungseinheit 28 auf, denen eine Steuereinheit 10 zugeordnet ist. Diese dient zur Bedienung der Zeiterfassungseinheit 28 und der Tonaufzeichnungseinheit 12.

Die Zeiterfassungseinheit 28 besteht aus einer hier als Mikrocomputer 11 ausgebildeten Recheneinheit sowie aus einer an diese angeschlossenen Anzeigeeinheit 13, einer internen oder externen (separaten) Druckereinheit 14 und einer Uhr 15 als periphere Bausteine.

Der Mikrocomputer 11 dient zur Verarbeitung der gemessenen Zeitintervalle. Der Mikrocomputer 11 besteht aus einem Mikroprozessor 16, einer Eingabe/Ausgabe-Einheit 17 und einem Speicher 18. Über die Eingabe/Ausgabe-Einheit 17 erfolgt die Kommunikation des Mikroprozessors 16 mit den peripheren Bausteinen und dem Speicher 18, der einen Festwertspeicher (ROM) und einen Schreib-/Lese-Speicher (RAM) für die Programm- und Datenspeicherung enthält.

Die Uhr 15 ist als ein Zeitgeberbaustein ausgebildet, der mit dem Mikroprozessor 16 gekoppelt ist. Der Zeitgeberbaustein führt ein periodisches Herunterzählen in 10 ms-Abständen aus, wobei ein entsprechendes Interrupt-Programm die Uhrzeit alle 10 ms auf den neuesten Stand bringt.

Die Anzeigeeinheit 13 weist zum einen eine Zeitanzeige 19 auf, die die aktuelle Uhrzeit und das Datum anzeigt. Die Zeitimpulse für die Zeitanzeige 19 werden durch die als Echtzeituhr arbeitende Uhr 15 geliefert. Zum anderen enthält die Anzeigeeinheit 13 eine Zeitintervallanzeige 20, die jeweils die Uhrzeit zu Beginn und am Ende eines jeden Zeitintervalls anzeigt. Außerdem zeigt sie die Nummer des Intervalls sowie das Datum an. Sowohl Zeitanzeige 19 als auch Zeitintervallanzeige 20 sind als digitale, optoelektronische Anzeigen, vorzugsweise als Flüssigkristall-Anzeigen, ausgebildet.

Über die Druckereinheit 14 können die im Schreib-/Lese-Speicher (RAM) befindlichen Zeitintervall-Daten ausgedruckt werden. Das Ausdrucken kann wahlweise über einen Mikro-Drucker innerhalb der Vorrichtung oder über einen externen Drucker erfolgen.

In der Tonaufzeichnungseinheit 12 sind eine Tonaufzeichnungseinrichtung 21 und ein Signalgeber 22 zusammengefaßt. Die Start-, Stopp- und Rücklaufimpulse erhält die Tonaufzeichnungseinrichtung 21 durch Betätigung von Schaltern in der Steuereinheit 10. Die Tonaufzeichnungseinrichtung 21 ist als Mikrokassetten-Recorder ausgebildet. Dieser speichert die von einer Bedienperson erzeugten Sprachsignale. Der Signalgeber 22 kann optisch oder akustisch ein Signal abgeben, das das Bedienpersonal veranlassen soll, Sprachsignale auf das Magnetband der Tonaufzeichnungseinrichtung 21 zu übermitteln. Der Signalgeber 22 wird durch den Mikroprozessor 16 jeweils zu Beginn des Zeitintervalls angesteuert. Der Bedienperson ist es freigestellt, ob sie dem Signalgeber 22 durch ein Sprachsignal antwortet. Es ist aber in einer weiteren Ausführungsform auch möglich, daß der Signalgeber 22 in der Weise mit der Tonaufzeichnungseinrichtung 21 gesteuert wird, daß das als Antwort auf den Signalgeber 22 durch die Bedienperson gegebene Sprachsignal automatisch die Aufnahmefunktion der Tonaufzeichnungseinrichtung 21 auslöst. Dabei muß durch eine besondere Richtcharakteristik bzw. Empfindlichkeit des Mikrofons in der Tonaufzeichnungseinrichtung 21 sichergestellt sein, daß sich die Tonaufzeichnungseinrichtung 21 nicht aufgrund von Störgeräuschen in der Umgebung einschaltet, sondern nur aufgrund des Sprachsignals der Bedienperson.

In einer weiteren Ausführungsform ist der Signalgeber 22 mit der Aufnahmefunktion der Tonaufzeichnungseinrichtung 21 in der Weise gekoppelt, daß gleichzeitig mit dem Signal des Signalgebers 22 die Aufnahmefunktion der Tonaufzeichnungseinrichtung 21 eingeschaltet wird. Diese Schaltung ist für diejenigen Fälle der Zeitintervallmessung vorgesehen, die eine Kommentierung durch Sprachsignale der Bedienperson für jedes Zeitintervall erfordern.

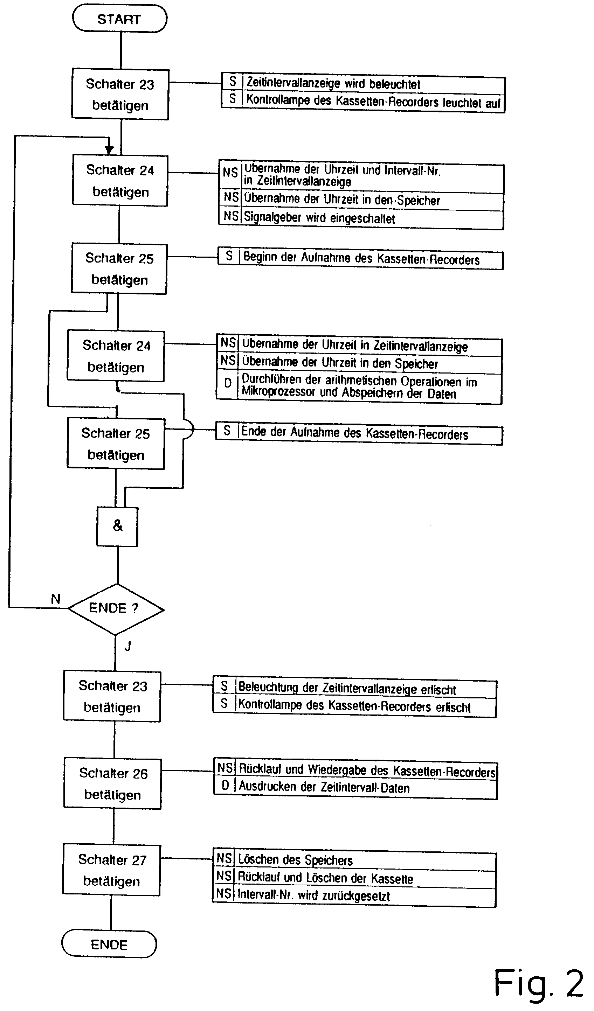

Die Steuereinheit 10 wird durch eine Steuerschaltung gebildet, die sich aus Speichergliedern und Verzögerungsgliedern zusammensetzt. Ein NS-Glied bewirkt bei Betätigen des entsprechenden Schalters ein sofortiges Durchschalten eines Impulses. Liegt hingegen eine Spannung am Eingang eines S-Gliedes an, so ist der Ausgang desselben so lange mit einer Spannung (1-Signal) beaufschlagt, bis es durch ein weiteres 1-Signal an einem S-Glied zurückgesetzt wird. Ein D-Glied hat die Wirkung, daß das Signal am Eingang desselben erst nach einer bestimmten Verzögerungszeit am Ausgang anliegt. Diese Glieder lassen sich durch Verwendung von bistabilen Kippstufen (Flipflops) verwirklichen. Der in Fig. 2 angegebene Funktionsablaufplan der Steuereinheit 10 dient als Grundlage für die Realisierung der Steuerschaltung. In ihm werden folgende Kürzel als Hinweis für die entsprechenden Glieder verwandt:
- NS: - nichtspeicherndes Glied
- S: - Speicherglied
- D: - Verzögerungs-Glied.

Wie aus Fig. 1 ersichtlich, weist die Steuereinheit 10 fünf Schalter 23..27 auf, die vorzugsweise als Drucktastenschalter ausgebildet sind. Durch diese Schalter 23..27 kann die Bedienperson Einfluß auf die Erfassung und die Verarbeitung der Zeitintervalle nehmen.

Nach Fig. 2 wird durch Drücken des Ein/Aus-Schalters 23 am Beginn einer Messung die erfindungsgemäße Vorrichtung auf Bereitschaft geschaltet. An den entsprechenden Bauteilen liegt nun eine Versorgungsspannung an. Gleichzeitig wird die Zeitintervallanzeige 20 beleuchtet und eine Kontrollampe der Tonaufzeichnungseinrichtung 21 leuchtet auf, und zwar so lange, bis die ganze Messung abgeschlossen ist.

Durch Betätigen des Start/Stopp-Schalters 24 kann nun der Beginn der Zeitmessung für das erste Zeitintervall ausgelöst werden. Mit diesem Schaltimpuls wird bewirkt, daß die aktuelle Uhrzeit, die in der Zeitanzeige 19 angegeben ist, in die Zeitintervallanzeige 20 übernommen und dort angezeigt wird. Gleichzeitig wird dieser Uhrzeitwert in den Speicher 18 abgespeichert. Darüber hinaus wird der Signalgeber 22 eingeschaltet, der auf den Einsatz des Kassetten-Recorders zur Speicherung von Sprachsignalen hinweist.

Nachfolgend wird durch Drücken eines Start/Stopp-Schalters 25 die Aufnahmefunktion der Tonaufzeichnungseinheit 12 eingeschaltet. Es werden nun Sprachsignale der Bedienperson, die aus Kommentaren, Hinweisen oder notwendigen Erläuterungen zum jeweiligen Zeitintervall bestehen - dessen Beginn durch die Uhrzeitangabe in der Zeitintervallanzeige 20 festgehalten ist -, aufgenommen.

Im weiteren Verlauf kann nun durch nochmaliges Drücken des Start/Stopp-Schalters 25 die Aufzeichnung der Sprachsignale auf der Tonaufzeichnungseinrichtung 21 beendet werden, bevor durch nochmalige Betätigung des Start/Stopp-Schalters 24 das Ende der Zeitintervallmessung bestimmt wird. Bei relativ kurzen Zeitintervallmessungen kann aber auch durch Betätigung des Start/Stopp-Schalters 24 zuerst das Ende des Zeitintervalls ermittelt werden, bevor das Ende der Tonaufzeichnung durch Drücken des Schalters 25 erfolgt. Durch Drücken des Schalters 24 erhält der Mikroprozessor 16 einen Impuls, der eine Übernahme der aktuellen Uhrzeit in die Zeitintervallanzeige 20 sowie in den Speicher 18 bewirkt. Nach einer Verzögerungszeit wird ein Mikroprogramm ausgelöst, das den Mikroprozessor 16 arithmetische Operationen ausführen läßt. Das Mikroprogramm, das im Festwertspeicher (ROM) des Speichers 18 enthalten ist, liegt als Maschinencode vor. Das Mikroprogramm führt Subtraktions- und Additionsbefehle aus. Des weiteren weist es auch einer Variablen einen Wert zu, der mit jeden weiteren Aufruf des Programms hochgezählt wird und damit die Zeitintervallnummer angibt. Die berechneten Differenz- und Summenwerte werden dann in dem Speicher 18 abgespeichert, in dem bereits die Zeitintervall-Daten der gemessenen Zeitintervalle vorliegen. Die Intervallnummer erscheint neben der Uhrzeit und dem Datum in der Zeitintervallanzeige 20 als Kennzeichnung für das Zeitintervall.

Nachdem Schalter 24 und 25 jeweils zweimal betätigt wurden, ist eine Zeitintervallmessung bzw. eine Tonaufzeichnung abgeschlossen. Durch nochmaliges Drücken des Schalters 24 kann eine weitere Zeitintervallmessung ausgelöst werden. Die Anzahl der Zeitintervallmessungen, die die Vorrichtung in der Lage ist zu messen, hängt im wesentlichen von der Kapazität des Speichers 18 und der Tonaufzeichnungseinrichtung 21 ab. Bei Vorhandensein eines 65536-Bit Schreib-/Lese-Speichers (RAM), der Platz für weit über tausend Zeitintervallmessungen bietet, wird die Anzahl der Zeitintervalle durch die Kapazität der Tonaufzeichnungseinrichtung 21 bestimmt. In Abhängigkeit von der Länge der Aufnahme können jedoch mehrere hundert Zeitintervallmessungen durchgeführt werden.

Nach Durchführung einer gewünschten Anzahl von Zeitintervallmessungen wird durch Betätigen des Ein/Aus-Schalters 23 die Messung beendet. Die Beleuchtung der Zeitintervallanzeige 20 und die Kontrollampe der Tonaufzeichnungseinrichtung 21 erlöschen. Der Mikrocomputer 11, insbesondere der Speicher 18, wird aber weiterhin durch den die Versorgungsspannung liefernden Akku versorgt. Die Vorrichtung kann nun so lange ausgeschaltet bleiben, bis beispielsweise an einem anderen Ort eine weitere Messung erfolgen soll. Diese kann dann durch Betätigen des Schalters 23 neu begonnen werden, und zwar unter fortsetzender Zählung der Zeitintervallnummer.

Zum Auswerten der Zeitintervall-Daten dienen die Schalter 26 und 27, die ausschließlich durch befugte Personen betätigt werden können. Zu diesem Zweck besitzen die Schalter 26 und 27 einen Code oder sind nur mit einem Schlüssel betätigbar. Durch Betätigen des Schalters 26 wird ein Impuls erzeugt, der den Rücklauf der Kassette in der Tonaufzeichnungseinrichtung 21 und das nachfolgende Abspielen derselben bewirkt. Mit Verzögerung wird das Ausdrucken der gemessenen und berechneten Zeitintervall-Daten ausgelöst. Die Verzögerungszeit des Verzögerungsgliedes entspricht der Rücklaufzeit der Tonaufzeichnungseinrichtung 21, so daß gleichzeitig mit der Wiedergabe der auf der Kassette enthaltenen Informationen das Ausdrucken der Zeitintervall-Daten durch die Druckereinheit 14 erfolgt. Mit nachfolgendem Auslösen des Schalters 27 wird der Speicher 18 gelöscht und die Zeitintervallnummer im Mikroprogramm zurückgesetzt. Gleichzeitig erfolgt der Rücklauf und das Löschen der Kassette, womit die Vorrichtung erneut für eine Messung, durchgeführt durch eine Bedienperson, zur Verfügung steht.

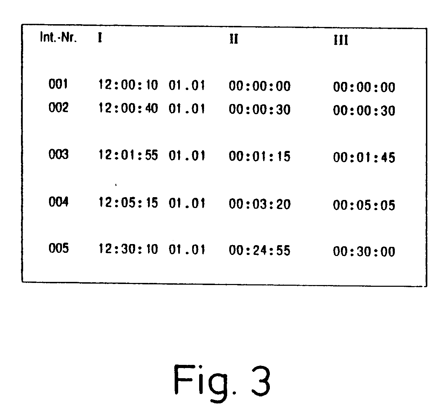

In Fig. 3 ist ein Ausdruckmuster einer Messung angegeben. Unter der Spalte I sind insgesamt fünf Stoppzeiten angegeben, wobei als zusätzliche Information Tag und Monat der jeweiligen Stoppzeit neben dieser angeführt sind. In einer weiteren Spalte werden die Stoppzeiten durch fortlaufende Zeitintervallnummern durchnumeriert. In Spalte II sind die Differenzzeiten der Zeitintervalle angegeben. Diese berechnen sich als Differenz der jeweiligen Stoppzeit zu der Stoppzeit der vorangegangenen Zeitintervallnummer. In einer weiteren Spalte III werden die Differenzwerte aufsummiert und als Summenwerte für jedes Zeitintervall angegeben. Sowohl die Differenzwerte in Spalte II als auch die Summenwerte in Spalte III werden durch das Mikroprogramm im Mikrocomputer 11 berechnet und zusammen mit den Stoppzeiten in dem Schreib-/Lese-Speicher (RAM) abgespeichert.

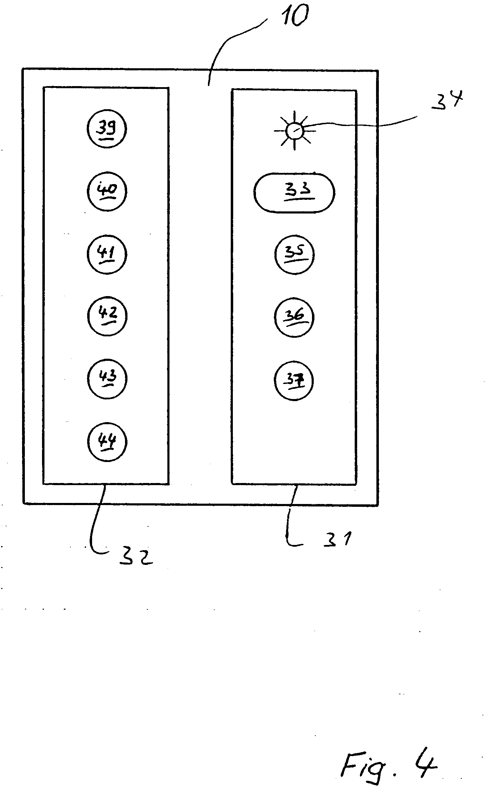

Die Fig. 4 zeigt eine Steuereinheit 30 nach einer anderen Ausführungsform der Erfindung. Die Steuereinheit 30 ist verbunden mit der Zeiterfassungseinheit 28 und der Tonaufzeichnungseinrichtung 21, die grundsätzlich dem Ausführungsbeispiel der Fig. 1 entsprechen können.

Die Steuereinheit 30 verfügt über zwei getrennte Bedienfelder. Ein Bedienfeld ist als Aufzeichnungsbedienfeld 31 und das andere als Auswertungsbedienfeld 32 ausgebildet. Das Auswertungsbedienfeld 32 ist gegen unbefugte Benutzung geschützt durch eine in der Fig. 4 nicht dargestellte abschließbare Abdeckung. Die Tasten des Auswertungsbedienfeldes 32 sind daher nur durch Befugte zugänglich. Demgegenüber ist das Aufzeichnungsbedienfeld 31 von jederman frei zugänglich.

Das Aufzeichnungsbedienfeld 31 ermöglicht verschiedene Aufzeichnungsvarianten. Dazu sind die übrigen Komponenten der Vorrichtung entsprechend programmiert. Kernstück des Aufzeichnungsbedienfelds 31 ist ein Programmwahlschalter 33. Dieser kann so ausgebildet und geschaltet sein, daß die unterschiedlichen Programme durch ein entsprechend häufiges aufeinanderfolgendes Drücken des Programmwahlschalters 33 abgerufen werden können. Des weiteren verfügt das Aufzeichnungsbedienfeld 31 über einen vorzugsweise als eine Leuchtdiode ausgebildeten Signalgeber 34, zwei Steuertasten 35 und 36 und eine Stopptaste 37.

Die im gezeigten Ausführungsbeispiel nach zwei alternativen Programmen erfolgende Aufzeichnung wird mit dem Aufzeichnungsbedienfeld 31 wie folgt gesteuert:

Bei Auswahl eines ersten Programms mit dem Programmwahlschalter 33 wird die Tonaufzeichnungseinheit 12 durch Drücken der Steuertaste 35 in Aufnahmebereitschaft versetzt. Dem Bediener wird dieses angezeigt durch ein Blinken der Leuchtdiode des Signalgebers 34. Mit der Steuertaste 36 wird die Zeiterfassungseinheit 28 gesteuert. Beim ersten Drücken der Steuertaste 36 erscheint die Startuhrzeit mit der ersten Intervallnummer in der Anzeigeeinheit 13. Beim nächsten Betätigen der Steuertaste 36 erscheint die nächste Uhrzeit mit der folgenden Intervallnummer und das errechnete Zeitintervall in der Anzeigeeinheit 13. Die Tonaufzeichnungseinrichtung 21 wird mit der Steuertaste 35 gestartet und gestoppt. Dazu ist vorzugsweise die Steuertaste 35 so ausgebildet, daß die Tonaufzeichnung erfolgt, solange die Steuertaste 35 gedrückt bleibt. Zum Schluß der Messung wird die Stopptaste 37 betätigt. Dadurch erlöschen die Anzeigeeinheit 13 und die Leuchtdiode des Signalgebers 34.

Wird am Programmwahlschalter 33 das zweite Programm gewählt, läßt sich mit der Steuertaste 35 die Tonaufzeichnungseinrichtung 21 auf Dauerbetrieb starten. Es kann so lange eine fortlaufende Tonaufzeichnung erfolgen, bis die Stopptaste 37 betätigt wird. Der Signalgeber 34 zeigt auch hier die Aufnahmebereitschaft der Tonaufzeichnungseinheit 12 an. Zur Zeitintervallerfassung dient wiederum die Steuertaste 36. Die Zeiterfassung läuft wie beim ersten Programm ab. Beendet wird die Zeitintervallmessung und die Tonaufzeichnung durch das Betätigen der Stopptaste 37. Die Anzeige in der Anzeigeeinheit 13 und der Signalgeber 34 erlöschen. Gleichzeitig kann der Arbeitsspeicher, insbesondere die Intervallnummer, zurückgesetzt werden.

Das Auswertungsbedienfeld 32 verfügt über fünf mit festen Funktionen belegte Schalter 39..43 und einen Doppelfunktionsschalter 44. Funktionen dieser Schalter sind folgende:
Mit dem Schalter 39 erfolgt die Betätigung der Druckereinheit 14 zum Ausdruck (nur) der Zeitintervalle. Mit diesem Schalter kann auch ein gegebenenfalls anzuschließender externer Drucker betätigt werden. Der Schalter 40 dient zum Einschalten der gleichzeitigen Ton- und Zeitintervallwiedergabe.

Der Schalter 41 dient zum nichtlöschenden Rücklauf des Tonbands der Tonaufzeichnungseinheit 12. Der Schalter 42 dient zum Vorlauf des Tonbands der Tonaufzeichnungseinheit 12, und zwar ohne eine Aufnahme oder eine Wiedergabe.

Der Schalter 43 dient dazu, nur das Tonband der Tonaufzeichnungseinheit 12 abzuhören, um handschriftliche Notizen festzuhalten. Solange der Schalter 43 getätigt bzw. gedrückt bleibt, befindet sich die Tonaufzeichnungseinheit 12 im Wiedergabebetrieb.

Schließlich dient der Doppelfunktionsschalter 44 dazu, entweder den Speicher der Zeiterfassungseinheit 28 mit den abgespeicherten Zeitintervallen oder das Tonband der Tonaufzeichnungseinheit 12 zu löschen. Letztes erfolgt bei einem Löschrücklauf des Tonbands.

Soweit im Vorstehenden von Schaltern die Rede ist, kann es sich hierbei alternativ auch um Taster oder (durch Berührung aktivierbare) Sensoren handeln.

## Patentansprüche

1. Vorrichtung zur Erfassung von Informationen mit einer Zeiterfassungseinheit, die mindestens einen Zeitgeber und eine Anzeigeeinheit zur Anzeige von ermittelten Zeitintervallen aufweist, **dadurch gekennzeichnet,** daß der Zeiterfassungseinheit (28) eine zusätzliche Einrichtung zur Aufnahme und Wiedergabe von akustischen Signalen (Tonaufzeichnungseinheit 12) zugeordnet ist, um die akustischen Signale zu den Zeitintervallen aufzuzeichnen.

2. Vorrichtung nach Anspruch 1, dadurch gekennzeichnet, daß eine Aufzeichnung der akustischen Signale durch eine Tonaufzeichnungseinheit (12) während und/oder nach einer Ermittlung der diesen zugeordneten Zeitintervalle erfolgt.

3. Vorrichtung nach Anspruch 1 oder 2, gekennzeichnet durch eine Steuereinheit (10, 30) zum Steuern der Zeiterfassungseinheit (28) und der Tonaufzeichnungseinheit (12).

4. Vorrichtung nach Anspruch 3, dadurch gekennzeichnet, daß die Steuereinheit (30) über mehrere Bedienfelder (Aufzeichnungsbedienfeld 31; Auswertungsbedienfeld 32) verfügt, wobei mindestens ein Bedienfeld (Auswertungsbedienfeld 32) derart ausgebildet ist, daß es nur von befugten Personen betätigbar ist.

5. Vorrichtung nach einem der Ansprüche 1 bis 4, dadurch gekennzeichnet, daß die Tonaufzeichnungseinheit (12) eine Tonaufzeichnungseinrichtung (21) zur Aufnahme und Wiedergabe von Tonsignalen und einen Signalgeber (22), insbesondere einen optischen Signalgeber (22), aufweist, der vorzugsweise zu jeder Zeitintervallmessung die Bereitschaft der Tonaufzeichnungseinrichtung (21) zur Aufnahme anzeigt und/oder die Tonaufzeichnungseinrichtung (21) einschaltet.

6. Vorrichtung nach Anspruch 1, dadurch gekennzeichnet, daß die Tonaufzeichnungseinheit (12) zur Aufnahme und Wiedergabe von jeweils zu einer Zeitintervallmessung gehörenden Sprachsignalen, insbesondere gesprochenen Kommentierungen, ausgebildet ist.

7. Vorrichtung nach Anspruch 1, dadurch gekennzeichnet, daß die Zeiterfassungseinheit (28) eine Recheneinheit aufweist, insbesondere einen Mikrocomputer (11) mit einem Mikroprozessor (16) zur Berechnung von Differenz- und/oder Summenwerten der Zeitintervalle.

8. Vorrichtung nach Anspruch 7, dadurch gekennzeichnet, daß der Mikroprozessor (16) mit einer externen Uhr (15), insbesondere einer Echtzeituhr, und/oder mit einem Speicher (18), insbesondere einem Schreib-/Lese-Speicher (RAM), zur Abspeicherung der Zeitintervall-Daten verbunden ist.

9. Vorrichtung nach Anspruch 7 oder 8, dadurch gekennzeichnet, daß das Programm zur Berechnung der Zeitintervall-Daten in einem Speicher (18), insbesondere in einem Festwertspeicher (ROM), abgespeichert ist.

10. Vorrichtung nach einem der Ansprüche 7 bis 9, dadurch gekennzeichnet, daß eine Druckereinheit (14) über eine Eingabe/Ausgabe-Einheit (17) mit dem Mikroprozessor (16) verbunden ist zum Ausdrucken der Zeitintervall-Daten.

11. Vorrichtung nach einem der Ansprüche 8 bis 10, dadurch gekennzeichnet, daß eine Zeitanzeige (19) zur Darstellung der aktuellen Uhrzeit und eine Zeitintervallanzeige (20) zur Darstellung der den jeweiligen Zeitintervallbeginn kennzeichnenden gespeicherten Uhrzeit mit der Uhr (15) verbunden sind, wobei vorzugsweise die Zeitanzeige (19) und die Zeitintervallanzeige (20) als digitale, optoelektronische Anzeigen ausgebildet sind.
